# EUROPEAN PATENT SPECIFICATION

(11) **EP 3 357 266 B1**
(45) Date of publication and mention of the grant of the patent: **28.10.2020**
(21) Application number: 16852684.6
(22) Date of filing: 30.09.2016
(51) Int. Cl.: H04W 12/04, H04N 21/4363, H04L 12/761, H04W 4/80, H04W 48/18, H04W 8/00, H04W 76/14, H04W 76/15, H04W 76/11

(54) **SYSTEMS, DEVICES, AND METHODS FOR SIMULATANEOUSLY EXCHANGING MESSAGES BETWEEN A LOW-ENERGY RADIO DEVICE AND MULTIPLE COMMUNICATION DEVICES**
SYSTEME, VORRICHTUNGEN UND VERFAHREN FÜR SIMULTANEN NACHRICHTENAUSTAUSCH ZWISCHEN EINER NIEDRIGENERGIE-FUNKVORRICHTUNG UND MEHREREN KOMMUNIKATIONSVORRICHTUNGEN
SYSTÈMES, DISPOSITIFS ET PROCÉDÉS POUR L'ÉCHANGE SIMULTANÉ DE MESSAGES ENTRE UN DISPOSITIF RADIOÉLECTRIQUE À FAIBLE ÉNERGIE ET DE MULTIPLES DISPOSITIFS DE COMMUNICATION

(30) Priority: 30.09.2015 US 201562235526 P
(43) Date of publication of application: 08.08.2018
(73) Proprietor: Google LLC, Mountain View, CA 94043 (US)
(72) Inventor: TROUNG, Taddy, Ho Chi Minh City (VN); NGUYEN, Huy, Ho Chi Minh City (VN)
(74) Representative: Seymour-Pierce, Alexandra Isobel
(86) International application number: PCT/US2016/054688
(87) International publication number: WO 2017/059206

(56) References cited:
- CN-A- 104 539 325
- US-A1- 2013 173 658
- US-A1- 2014 188 348
- US-A1- 2014 380 445
- US-A1- 2015 003 607
- US-A1- 2015 245 369

## Description

### CROSS-REFERENCE TO RELATED APPLICATIONS

This application claims priority to and the benefit of U.S. Provisional Application No. 62/235,526, entitled "METHODS AND APPARATUSES FOR SIMULATANEOUSLY EXCHANGING MESSAGES BETWEEN A LOW-ENERGY RADIO DEVICE AND MULTIPLE CENTRAL DEVICES," filed Sep. 30, 2015.

This application is also related to U.S. Provisional Application No. 62/235,467 entitled "SYSTEMS, DEVICES AND METHODS OF USING A CONDUCTIVE CASING FOR A BATTERY CONTACT", filed on Sep. 30, 2015; to U.S. Provisional Application No. 62/235,469 entitled "SYSTEMS, DEVICES, AND METHODS OF MULTIPLEXED USE OF A CONDUCTIVE CASING", filed on Sep. 30, 2015; and to U.S. Provisional Application No. 62/235,472 entitled "SYSTEMS, DEVICES AND METHODS OF DETECTION OF USER INPUT", filed on Sep. 30, 2015.

### BACKGROUND

Bluetooth Low Energy (BLE) is a wireless technology developed by the Bluetooth Special Interest Group (SIG) for short-range communication to be used in a low-energy radio device. In contrast with previous Bluetooth versions, BLE has been designed as a low-power solution for control and monitoring applications. BLE is a distinctive feature of the Bluetooth version 4.0 and includes other specifications.

Currently available low-energy radio devices are optimized for low cost and low power consumption and the typical low-energy radio technology, such as BLE technology included in these devices has several key limitations preventing many use-case scenarios. For example, some low-energy radio devices are generally permitted to support a unidirectional communication (i.e., either only for transmission or only for receiving) during an active connection. In other words, traditional low-energy radio devices do not support master-slave role changes (role-swapping) while being connected to a communication device during an active connection. In such cases, when a peripheral or slave device is connected to a master device, it is not possible for the slave device to connect to other master devices. Furthermore, when a low-energy radio device has no available user interface to select a communication device from a list of available peer-devices, the low-energy radio device is limited to be the broadcaster predesignated by an observer device in order to establish a connection. Once the connection is established, such a peripheral device generally cannot receive messages from other communication devices while being connected to the first communication device.

CN 104 439 325 A discloses a networking interconnection method and system based on low-power-consumption Bluetooth piconets. Multiple peripheral devices broadcast pieces of service type information; a central Bluetooth device generates a corresponding peripheral device service list according to the Bluetooth addresses so that networking of the central device and the peripheral devices can be achieved; after networking is completed, corresponding piconets are established for the central device and the peripheral devices.

### SUMMARY

Aspects of the invention are defined in the appended independent claims, with optional features defined in the dependent claims appended thereto. Embodiments described herein which are not covered by the claims are provided as examples useful for understanding the invention.

The present disclosure include systems, devices, and methods for exchanging messages between a low-energy radio device, such as a BLE device and multiple communication devices, such as Smartphones, smart watches, tablets, laptops, other computing devices, and/or the like.

In some embodiments, a low-energy radio device includes a transceiver and a processor communicatively coupled to the transceiver. The processor is configured to operate in a first mode and a second mode by operating in the first mode by scanning for, via the transceiver, predetermined radio frequencies, and receiving, in response to operating in the first mode, a broadcast packet broadcasted by a first communication device of a set of communication devices. The processor is further configured to operate in the first mode and the second mode by establishing a communication channel with the first communication device. The processor is further configured to operate simultaneously in the first mode and the second mode by operating in the second mode with respect to the first communication device and operating in the first mode with respect to other devices of the set of communication devices.

In some embodiments, a method includes scanning predetermined radio frequencies, via a transceiver communicatively coupled to a processor operating in a first mode. The method also includes receiving, via the transceiver, in response to operating in the first mode, a broadcast packet broadcasted by a first communication device of a set of communication devices. The method also includes establishing a communication channel with the first communication device. The method also includes operating the processor simultaneously in the first mode and the second mode by operating the processor in the second mode with respect to the first communication device and operating the processor in the first mode with respect to other devices of the set of communication devices.

In some embodiments, a system includes a set of communication devices that in turn includes a first communication device and a second communication device. The system also includes a low-energy radio device. The low-energy radio device including a transceiver, a transmitter, and a processor communicatively coupled to the transceiver and the transmitter. The processor is configured to operate in a first mode and a second mode by operating in the first mode by scanning for, via the transceiver, predetermined radio frequencies, receiving, in response to operating in the first mode, a first broadcast packet broadcasted by the first communication device and establishing a first communication channel with the first communication device, and by operating in the second mode with respect to the first communication device and operating in the first mode with respect to the second communication device. The processor is further configured to operate in a first mode and a second mode by receiving, in response to operating the processor in the first mode with respect to the second communication, a second broadcast packet broadcasted by a second communication device of the set of communication devices. The processor is further configured to operate in a first mode and a second mode by establishing a second communication channel with the second communication device and operating the processor simultaneously in the first mode and the second mode by operating the processor in the second mode with respect to the first communication device and the second communication device and operating the processor in the first mode with respect to remainder devices of the set of communication device.

### Brief Description of the Drawings

The skilled artisan will understand that the drawings primarily are for illustrative purposes and are not intended to limit the scope of the inventive subject matter described herein. The drawings are not necessarily to scale; in some instances, various aspects of embodiments of the disclosure presented herein may be shown exaggerated or enlarged in the drawings to facilitate an understanding of different features. In the drawings, like reference characters generally refer to like features (e.g., functionally similar and/or structurally similar elements).
FIG. 1 is a schematic block diagram showing a system between multiple communication devices and a low-energy radio device, according to an embodiment.
FIG. 2A shows additional detail of the communication device 100 of FIG. 1, according to an embodiment.
FIG. 2B shows additional detail of the low-energy radio device of FIG. 1, according to an embodiment.
FIG. 3A illustrates a use case scenario, and shows a first communication device in a broadcast role that is broadcasting data/packets receivable by a low-energy radio device for thereafter establishing a first connection.
FIG. 3B illustrates the use case scenario in FIG. 3A, and shows a second communication device in a broadcast role that is broadcasting data/packets receivable by the low-energy radio device for thereafter establishing a second connection.
FIG. 4 illustrates a method that can be executed by a communication device to establish a connection with a low-energy radio device, according to an embodiment.
FIG. 5 illustrates another method that can be executed by a low-energy radio device to process data received from multiple communication devices, according to an embodiment.
FIG. 6 shows a method for connection a low-energy radio device to multiple communication devices, according to an embodiment.

The features and advantages of the embodiments disclosed herein will become more apparent from the detailed description set forth below when taken in conjunction with the drawings.

### Detailed Description

Aspects disclosed herein are directed to provide low-energy radio devices (also sometime referred to simply as "radio devices") capable of supporting multiple roles in a networked/mesh environment, such as, for example, observer (i.e., in an observer mode) and peripheral (i.e., in a peripheral mode) roles. As such, the low energy radio devices can execute commands received through broadcast packets from one or more communication devices while scanning for predetermining radio frequencies for broadcast packets broadcasted by other communication devices.

The term "low-energy" as used herein to describe a device refers to the ability of that device to establish and/or employ at least one communication protocol that when powered and/or consuming charge equivalent to that generated by a single cell battery, such as from a coin cell battery for example. For example, in some embodiments, the battery/power source can generate from about 20 mAh to about 300 mAh, and/or has a peak current that is less than about 30 mA. In some embodiments, the communication protocol is selected from the group consisting of Bluetooth low-energy (BLE), ANT™ , ANT+™, ZigBee®, ZigBee RF4CE (Radio Frequency for Consumer Electronics), Nike+®, IrDA® from the Infrared Data Association, and/or the like. In some embodiments, the communication protocol is BLE.

The term "radio" as used herein to describe a device refers to the ability of that device to establish and/or employ at least one wireless communication protocol in the radio frequency range from about 3 kHz to about 300 GHz, including all value and sub ranges in between. In some embodiments, a radio device as described herein establishes and/or employs at least one wireless communication protocol at about 2.4GHz.

Aspects disclosed herein are further directed to systems, devices, and methods for simultaneously exchanging messages between a low-energy radio device and multiple central devices (also sometimes referred to as "communication devices"). It should be appreciated that various concepts introduced above and discussed in greater detail below may be implemented in any of numerous ways, as the disclosed concepts are not limited to any particular manner of implementation. By way of non-limiting example, in some embodiments, the central devices are Smartphones, smart watches, tablets and/or any other computing devices. In such embodiments, the smart phones may have an application or other software that is configured to support the role of broadcaster for establishing a connection with a low-energy radio device. The low-energy radio device is configured to support, in parallel, the roles of an observer and a peripheral. As such, the low-energy radio device can simultaneously handle one or more active connections operating as a peripheral while periodically scanning radio frequencies to identify and connect to other communication devices. Some implementations may be specific to a particular type of low-energy radio device, such as a smart illumination device, a wearable device and/or other smart-home hardware. Examples of specific implementations applications are provided primarily for illustrative purposes.

In some embodiments, the radio device and/or any communication device as disclosed herein is configurable for operating in one or more of four roles (also sometimes referred to as "modes" or "profiles") with respect to another device as described herein: (1) broadcaster role; (2) observer role; (3) peripheral role; and (4) central/master role. Explained hereon with reference to the radio device for simplicity, in some embodiments, the radio device includes a transmitter, and is configured to operate in the broadcaster role with respect to another device by broadcasting packets, such as data packets, to other devices. In some embodiments, the radio device includes a receiver, and is configured to operate in the observer role by listening, scanning, and/or otherwise monitoring one or more radio frequencies for packets broadcast by other devices. In some embodiments, the radio device includes both a receiver and a transmitter, and is configured to operate in the broadcaster role or the observer role, or in the peripheral role by both receiving and transmitting packets. In some embodiments, the transmitter and the receiver are included in a transceiver, which includes both transmission and receiving capabilities. The term "transceiver" as used herein can refer to a receiver and a transmitter that are structurally and/or functionally independent, or structurally and/or functionally interlinked. In some embodiments, a radio device in a peripheral role supports broadcasting "advertisements" and/or other promotional data as packets, and can connect to other devices to exchange packets via a peer-to-peer connection. In some embodiments, the radio device includes a receiver and a transmitter, and/or a transceiver, and is configured to operate in the central/master role that can include, among other things, listening/monitoring one or more radio frequencies for packets broadcast by other devices, initiating connections/communication channels with other devices, and serving as a master device in a connection/communication with other devices.

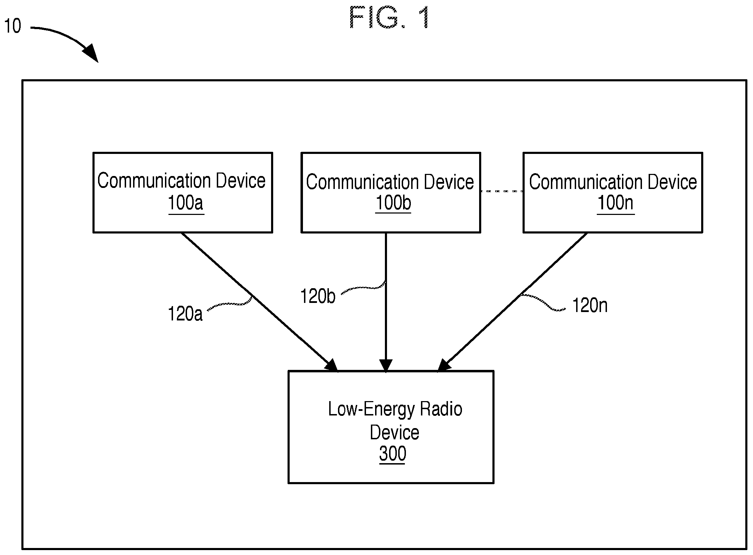

FIG. 1 is a schematic block diagram showing a system 10 that includes a set of communication devices 100a-100*n* and a low-energy radio device 300. In some embodiments, the communication devices 100a-100*n* and the low-energy radio device 300 are connected via any suitable network including, but not limited to, a wired network (an Ethernet, local area network (LAN), etc.), a wireless network (e.g., a wireless local area network (WLAN), a Wi-Fi network, a BLE-enabled network, etc.), or a combination of wired and wireless networks (e.g., the Internet, etc.). In some embodiments, one or more of the connections/communication channels between the communication device(s) 100a-100*n* and the radio device 300, illustrated herein as communication channels 120a-120n, can be based on BLE. In some embodiments, the network and/or the connectivity between the communication devices 100a-100*n* and the radio device 300 can include any suitable topology such as, but is not limited to, a broadcast topology, a mesh topology, a star topology, a scanning topology, and a point-to-point topology. Any of the connections and/or communication channels 120a-120*n* here can be continuous once formed (i.e., maintained for a duration of interaction), or formed on-demand.

Each of the communication devices 100a-100*n* can be any suitable computing device including, but not limited to, a Smartphone, a smart watch, a tablet, a laptop, a desktop, a server, and/or the like. In some embodiments, at least one of the communication devices 100a-100*n* can include at least a processor and a memory.

As noted herein, in some embodiments, any of the communication devices 100a-100*n* can be configured to operate in a broadcaster role, an observer role, a peripheral role, and/or a master role with respect to the other communication devices and/or with respect to the radio device 300. For example, the communication device 100a (also sometimes referred to as a "first communication device") can operate in a master role with respect to the radio device 300, and in a peripheral role with respect to the communication device 100b (also sometimes referred to as a "second communication device"). In some embodiments, the radio device 300 can be configured to operate in a broadcaster role, an observer role, a peripheral role, and/or a master role with respect to any of the communication devices 100a-100*n*. In some embodiments, the low-energy radio device 300 can be configured for simultaneous operation, and/or simultaneous support, of more than one role such as, for example, an observer role (e.g., with respect to the communication device 100a) and a peripheral role (e.g., with respect to the communication device 100a). Described with respect to the communication device 100a as a non-limiting representative of the communication devices 100a-100*n*, in some embodiments, the communication device 100a can be configured to operate in a central role with respect to the low-energy radio device 300, which in turn can be configured to operate in a peripheral role with respect to the communication device 100a. Simultaneously, the low-energy radio device 300 can be configured to operate in an observer role with respect to the other communication devices, and scan one or more predetermined radio frequencies for packets from the other communication devices. Said another way, through such an observer role, the low-energy radio device 300 can receive broadcast packets from other communication devices, such as communication devices 100b and/or 100*n*.

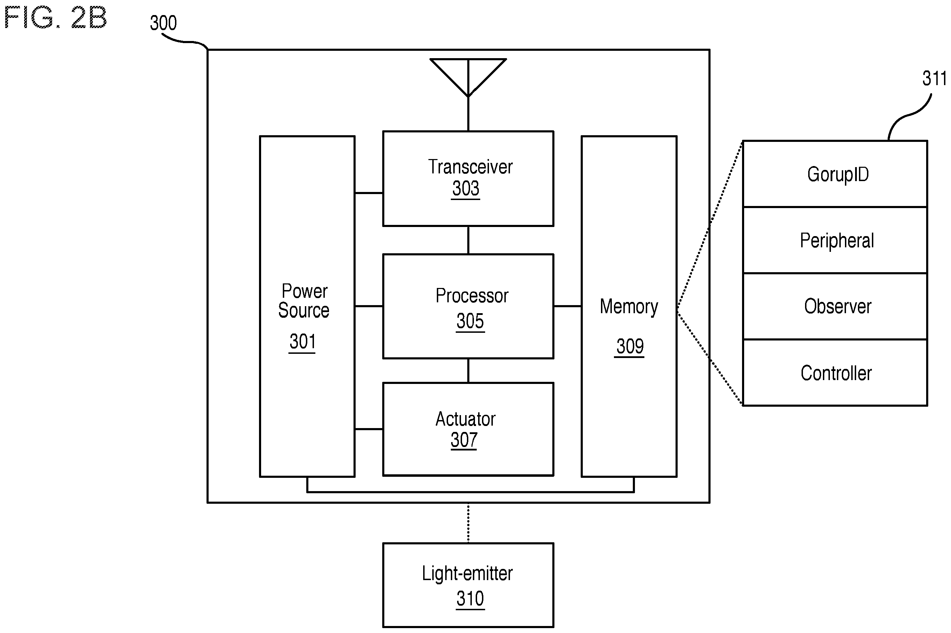

In some embodiments, the system 10 includes at least the first communication device 100a, the second communication device 100b and the low-energy radio device 300. The low-energy radio device 300, discussed in greater detail for FIG. 2B, further includes a transceiver and a processor communicatively coupled to the transceiver. The processor is configured to operate in a first mode and a second mode by operating in the first mode by scanning for, via the transceiver, predetermined radio frequencies. The processor is further configured to receive, in response to operating in the first mode, a first broadcast packet broadcasted by the first communication device 100a. The processor is further configured to establish a first communication channel (e.g., communication channel 120a) with the first communication device 100a, such as, for example, a BLE-based connection.

The processor is further configured to operate simultaneously in the first mode and the second mode by operating in the second mode with respect to the first communication device 100a and operating in the first mode with respect to the second communication device 100b. The processor is further configured to operate in a first mode and a second mode by receiving, in response to operating the processor in the first mode with respect to the second communication, a second broadcast packet broadcasted by a second communication device 100b of the set of communication devices. The processor is further configured to operate in a first mode and a second mode by establishing a second communication channel (e.g., communication channel 120b) with the second communication device 100b and operating the processor simultaneously in the first mode and the second mode by operating the processor in the second mode with respect to the first communication device 100a and the second communication device 100b and operating the processor in the first mode with respect to remainder devices of the set of communication devices (e.g., with respect to the communication device 100*n*).

In some embodiments, the first mode/role of the low-energy radio device 300 is an observer mode. In some embodiments, the second mode in the low-energy radio device 300 is a peripheral mode. In some embodiments, the low-energy radio device of the system includes a light-emitter communicably coupled to the processor, such as a light emitting diode (LED) lamp or bulb, for example. In some embodiments, the processor is further configured for executing one or more instructions received from the first communication device 100a via the first communication channel 120a while the processor is operating in the second mode and executing one or more instructions received from the second communication device 100b via the second communication channel 120b while the processor is operating in the second mode.

In some embodiments, the first broadcast packet includes a first group identification number and a first passcode, and the processor of the low-energy radio device 300 is configured to establish the first communication channel 120a based on the first group identification number and the first passcode. In some embodiments, the second broadcast packet including a second group identification number and a second passcode, and the processor of the low-energy radio device 300 is configured to establish the second communication channel 120b based on the second group identification number and the second passcode. In some embodiments, the first communication channel 120a is encrypted based on the first group identification number and a first passcode, and the second communication channel 120b is encrypted based on the second group identification number and a second passcode. In some embodiments, the low-energy radio device 300 further includes a light-emitter communicably coupled to the processor, the processor further configured for executing an instruction received from the first communication device while the processor is operating in the second mode, the instruction associated with control of operation of the light-emitter.

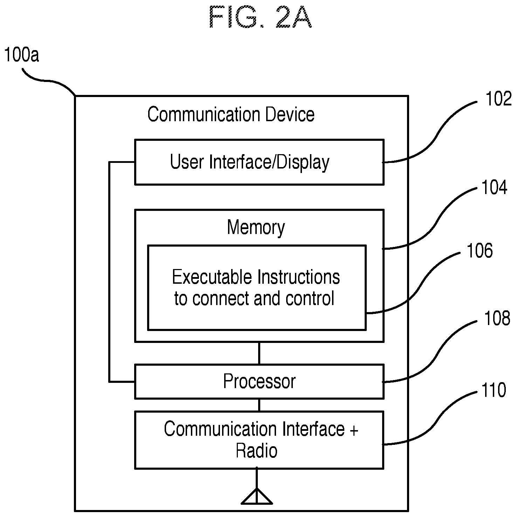

FIG. 2A illustrates detail of the communication device 100a of FIG. 1, which can be representative of any of the other communication devices 100b-100*n*.

In some implementation the communication device 100a shown in FIG. 2A includes a user interface/display 102 and/or graphical user interface (GUI) to display and receive information from a user. The user interface 102 can receive commands from a processor 108 physically coupled to a memory 104 with a set of executable instructions 106 which enables the communication device to connect and control operation of a low-energy radio device such as, for example, the low-energy radio device 300. Additionally, the communication device 100 includes a communication interface 110 to receive and transmit data to one or more devices, for example, exchanging data via a low-energy radio.

FIG. 2B illustrates detail of the low-energy radio device 300 of FIG. 1. In some embodiments, the low-energy radio device 300 includes a processor 305 configured for executing executable instructions 311 stored in the memory 309 and commands received from other devices. The executable instructions 311 include, but are not limited to, instructions to maintain a white list composed of GroupIDs (described later), and/or other identifiers; instructions to support a peripheral mode with respect to another device; instructions to support an observer mode with respect to another device; and instructions to drive the low-energy transceiver 303, such as a BLE radio, and the actuator 307. In some embodiments, the transceiver 303 can include a transmitter and/or a receiver independent of each other or interlinked, such as, for example, in combined circuitry. In some embodiments, the power source 301 can include components for a complete DC/DC converter solution. The actuator 307 can control, for example, a panel with light-emitting diodes (LEDs), such as one or more light-emitters (e.g., such as the light emitter 310), a smart bulb, a valve, a motor, a switch, a servo, and/or the like.

In some embodiments, the low-energy radio device 300 includes the transceiver 303 and a processor 305 communicatively coupled to the transceiver 303. In some embodiments, the processor 305 is configured to operate in a first mode and a second mode by operating in the first mode by scanning for, via the transceiver 303, predetermined radio frequencies. The processor 305 is also configured for receiving, in response to operating in the first mode, a broadcast packet broadcasted by a first communication device (e.g., the communication device 100a) of a set of communication devices (e.g., the communication devices 100a-100*n*) and establishing a communication channel (e.g., the communication channel 120a) with the first communication device. Additionally, the processor is configured for operating simultaneously in the first mode and the second mode by operating in the second mode with respect to the first communication device and operating in the first mode with respect to other devices of the set of communication devices.

In some embodiments, the first mode of the low-energy radio device 300 is the observer mode. In some embodiments, the second mode of the low-energy radio device is the peripheral mode. In some embodiments, the broadcast packet is a first broadcast packet and the communication channel is a first communication channel, and the processor 305 is further configured for receiving, in response to operating in the first mode with respect to other devices, a second broadcast packet broadcasted by a second communication device (e.g., the communication device 100b) of the set of communication devices. The processor 305 is further configured for establishing a second communication channel (e.g., the communication channel 120b) with the second communication device and operating simultaneously in the first mode and the second mode by operating in the second mode with respect to the first communication device and the second communication device. Additionally, the processor is configured for operating in the first mode with respect to remainder devices of the set of communication devices (e.g., any communication device other than the communication device 100a and the communication device 100b, such as the communication device 100*n*).

In some embodiments, the processor 305 is further configured to execute one or more instructions received from the second communication device via the second communication channel. In some embodiments, the processor 305 is further configured to execute one or more instructions received from the first communication device via the communication channel. In some embodiments, the low-energy radio device 300 includes one or more components that can be controlled by execution of the instruction(s) by the processor 305. Such components can include, but are not limited to, a light-emitter such as a bulb, a household electrical device/appliance such as a fan or a refrigerator, a household electronic device/appliance such as a smart speaker or a smart thermostat (e.g., Nest), and/or like. As a non-limiting example, and as illustrated in FIG. 2B, the low-energy radio device 300 can include a light emitter 310 who's operation can be controlled based on the instructions such as for example, to turn the light emitter 310 on and/or off on demand/periodically, to change a color of light emitted by the light emitter 310, and/or the like.

In some embodiments, the broadcast packet includes a group identification number and a passcode, and the processor 305 is further configured to establish a communication channel based on the group identification number and the passcode. In some embodiments, the communication channel is encrypted based on the group identification number and the passcode. In some embodiments, the low-energy radio device further includes the light-emitter 310 and the processor 305 is further configured to execute an instruction received from the first communication device, the instruction associated with control of operation of the light-emitter 310.

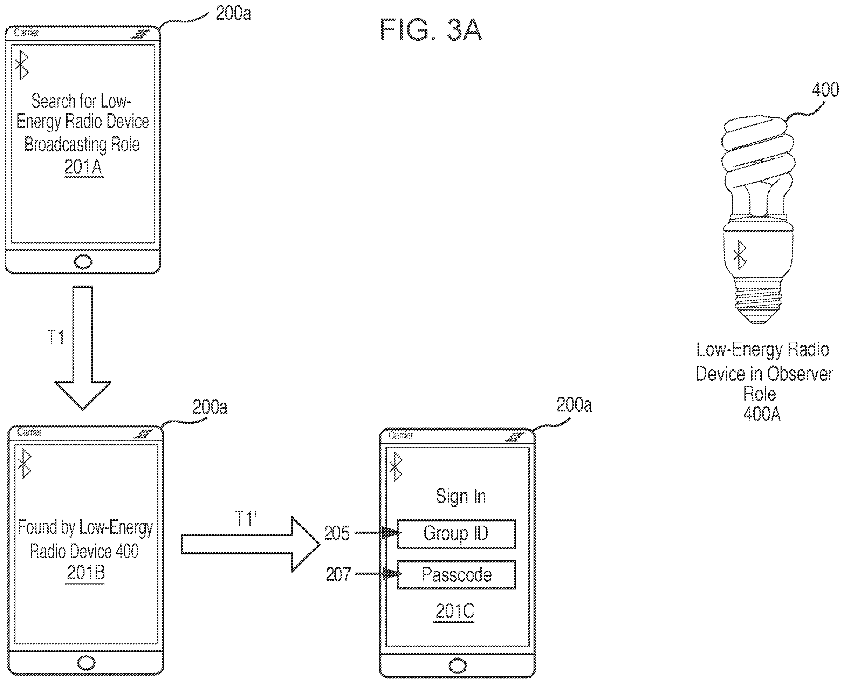

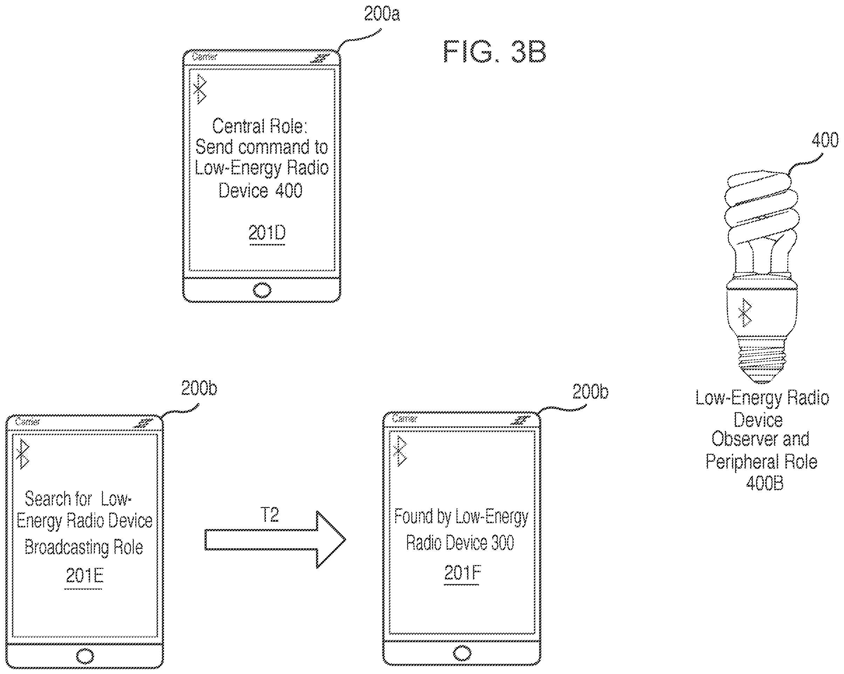

FIGS. 3A and 3B show example communication schemes in which a first communication device 200a (e.g., similar to the communication device 100a) and a second communication device 200b (e.g., similar to the communication device 100b), each operating in a broadcast role, broadcasts data packets to be found by a low-energy radio device 400 (e.g., similar to the radio device 300), and thereafter establish connections such as the communication channels 220a, 220b, respectively. In FIG. 3A, the first communication device 200a and the second communication device 200b are disposed within the observance range of the low-energy radio device 400. The communication device 200a can support a broadcaster role to send broadcast data packets continuously and/or periodically to any device enabled to receive the packets, such as the communication device 200b, the radio device 400, and/or the like. Simultaneously (or in some embodiments, substantially simultaneously or near simultaneously), the low-energy radio device 400 can support an observer role to repeatedly scan preset radio frequencies to receive any packets currently being broadcast by other devices.

In some embodiments, the broadcast packet contains data that describes the broadcaster and its capabilities, and customized information which enables the low-energy radio device 400 to support a peripheral and observer role in parallel. The supported peripheral role enables the low-energy radio device 400 to send data packets periodically and accept incoming data packets, some of which can include an indication of a connection to be made. In some embodiments, once in an active connection, the peripheral role dictates to follow timing of exchange data based on an indication thereof from a communication device of the active connection operating in a central role. In some embodiments, the low-energy radio device 400 supports, in parallel to the peripheral role, an observer role enabling it to receive any data packet currently being broadcasted.

For example, the low-energy radio device 400 can be in an observer role 400A (as illustrated in FIG. 3A), scanning predetermined radio frequencies for advertising packets while the communication device 200a is operating in broadcasting role 201A as shown in FIG. 3A. At some point during time T1, the low-energy radio device 400 detects the broadcasting data sent by the communication device 200a and sends a packet to the communication device 200a to accept an incoming connection. The communication device 200a can display the name or identifier of the low-energy radio device 400 as shown in 201B such that a user can decide to accept the incoming connection or reject it. In some embodiments, when a user decides to accept the incoming connection, a prompt screen 201C can be displayed on the communication device 200a requesting a user to enter a group identification (GroupID) number 205 (e.g., network ID, login ID or the like) and a passcode 207 (or password or key). The GroupID 205 and passcode 207 can be utilized to encrypt data packets sent between the communication device 200a and the low-energy radio device 400. In addition, the low-energy radio device 400 can store the GroupID 205 in a white list to validate, and accept incoming packets from the communication device 200a.

In some embodiments, the low-energy radio device 400 receives a data packet with the GroupID 205 and the passcode 207 and thereafter, a connection is established between the communication device 200a and low-energy radio 400. The established connection permits the exchange of data packets between the communication device 200a and the low-energy radio device 400 on an ad-hoc basis, wherein either the device 200a or 400 can start a communication at any time, irregular and/or aperiodic intervals of time. A connection can be permanent, including the periodical and/or occasional exchange of data packets between the devices 200a and 400. Moreover, the established connection is private, that is, the data is sent to and received by only the two peers involved in the connection, and no other devices.

FIG. 3B is a continuation of the example introduced in FIG. 3A. In some embodiments, a second communication device 200b can operate in broadcasting role 201E to send broadcast data packets periodically to any device enabled to receive the packets. Simultaneously, the low-energy radio device 400 can keep supporting an observer role to repeatedly scan preset radio frequencies to receive any advertising packets currently being broadcasted.

At some point during time T2, the low-energy radio device 400 detects the broadcasting data sent by the communication device 200b and sends a packet to the communication device 200b to accept an incoming connection. The communication device 200b can display the name or identifier of the low-energy radio device 400 as shown in 201F such that a user can decide to accept the incoming connection or reject it.

Note that in this instance (FIG. 3B), the low-energy radio device 400 is simultaneously supporting an observer role a peripheral role 400B. The supported peripheral role enables the low-energy radio device 400 to receive commands from the communication device which, during T2 is operating in central or master role as shown in 101D. The supported observer role enables the low-energy radio device 400 to establish connections with other devices, for example, the communication device 200n. If a connection is accepted, for example by entering a GroupID and passcode through the communication device 200b, the low-energy radio device 400 can exchange data in parallel with the devices 200a and 200b.

In some implementation the low-energy radio device 400, can further perform optimization over different factors including but not limited to scanning window (i.e., maximize the scanning window and scanning interval, with a goal to achieve nearly 100% scanning when out of connection mode and maximize the scanning window during connection mode); optimal scanning time interval; optimal advertising channels; and placement of connection over channels, for example, X number of channels for peripheral and central data exchange including frequency hopping. Other optimization criteria can include preventing conflicts which may cause a hardware reset, and minimizing the time of command execution to maximize the time allotted to scan for new messages.

In some embodiments, an advertising packet contains 31-byte payload. An example of the payload fields is provided in Table 1 below.

| | **Flag** | **Len** | **Local Name ID** | **Local Name data** | **Len** | **UUID** | **UUID data** |
|---|---|---|---|---|---|---|---|
| **Number of bytes** | 3 | 1 | 1 | 8 | 1 | 1 | 16 |
| **Value** | XXX | 0x09 | 0x09 | xxx... | 0x11 | 0x07 | xxxx... |

In some embodiments, the data in Local Name includes eight bytes of not encrypted data wherein each byte can range from a value of 1 to 127. A byte within the Local Name data is utilized to specify a GroupID.

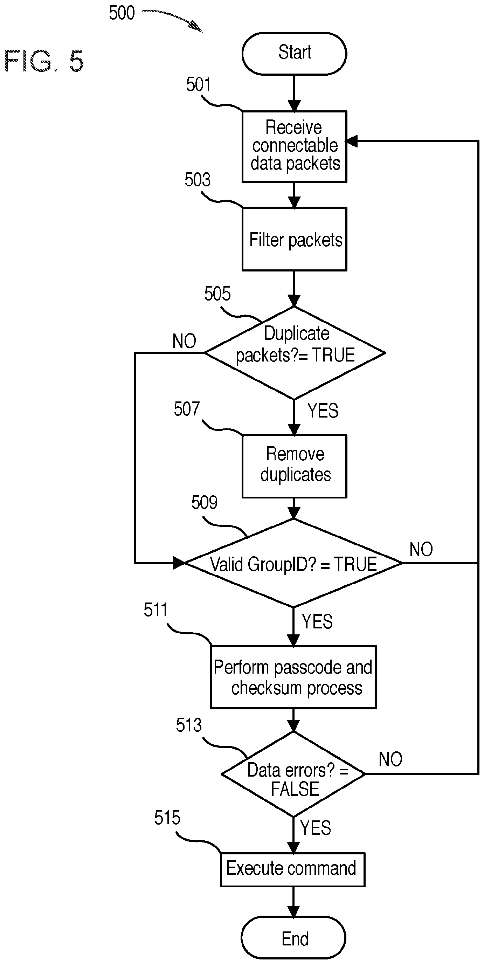

In some further embodiments, the universal unique identifier UUID can be encrypted, for example through an Advanced Encryption Standard (AES) or Rijndael with a key length of 128 bits and 2-byte counter for anti-sniffer further explained with respect to FIG. 5.

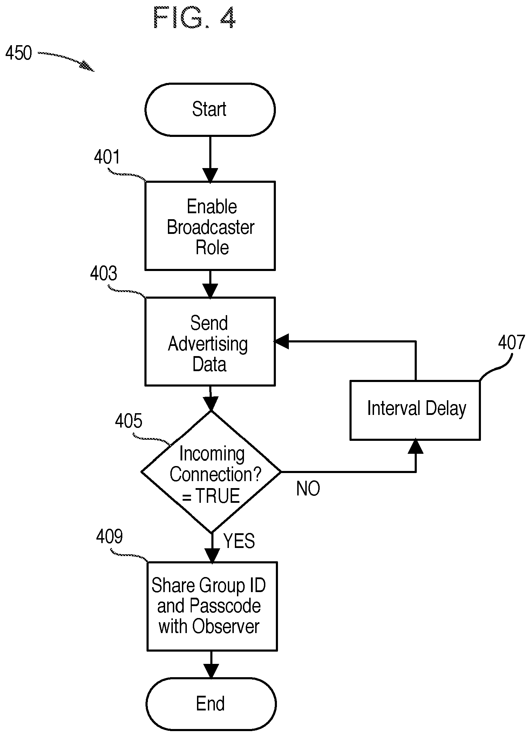

FIG. 4 is an example flowchart 450 executed by a communication device to establish a connection with a low-energy radio device. In some embodiments, a communication device, for example communication device 100a, can run processor executable instructions to support a broadcaster role 401. Thereafter, the communication device can send broadcast data packets periodically to any device enabled to receive the packets 403. The conditional stamen 405 determines if the communication device received an incoming connection packet. If an incoming connection packet was received, then the communication device can send a GroupID and passcode to accept the connection with an observer, for example, a low-energy radio device 400 as shown in FIGS. 3A-3B. In some embodiments, if there is no incoming connection packet, then the communication device waits for a predetermined interval of time 407 before sending the broadcast data 403 again.

FIG. 5 is an example logic flowchart 500 executed by a low-energy radio device to process data received from multiple communication devices. In some embodiments, a low-energy radio device, for example, low-energy radio device 300 shown in FIGS. 3A-3B can support a peripheral role. In such a case, the low-energy radio device can receive a message or advertising packets from a master device 501. The received data packets can be filtered 503 in a preprocessing stage to discard unwanted packets. Thereafter, the conditional statement 505 evaluates if the incoming packet is a duplicated packet. A duplicated packet can be identified, for example, by querying a memory in the low-energy radio device for recently received packets. If the low-energy radio device determines that the packet is a duplicate packet, then any duplicate is removed 507 so the packet is processed only once and the flow continues at the conditional statement 509. If the low-energy radio device determines that the packet is not a duplicate, then the flow goes to the conditional stamen 509.

In some embodiments, the conditional statement 509 evaluates if the received packet was sent by a communication device with a valid GroupID. For example, by examining a white list containing GroupIDs for permissible devices. If there is no corresponding entry for the GroupID included in the received data packet, then the flow goes to step 501. If the GroupID included in the received data packet is listed in the white list, then the low-energy radio device performs a passcode and checksum process 511. The conditional statement 513 evaluates if there are any data errors in the received packet. For example, if the results from the checksum process are available in memory, this may be an indicator of data error, therefore the packet is ignored and the flow continues at step 501. If it is determined on 513 that there is no errors, then the decrypt the UUID field of the packet is decrypted, for example through AES-128 and the decrypted command is executed by the low-energy radio device.

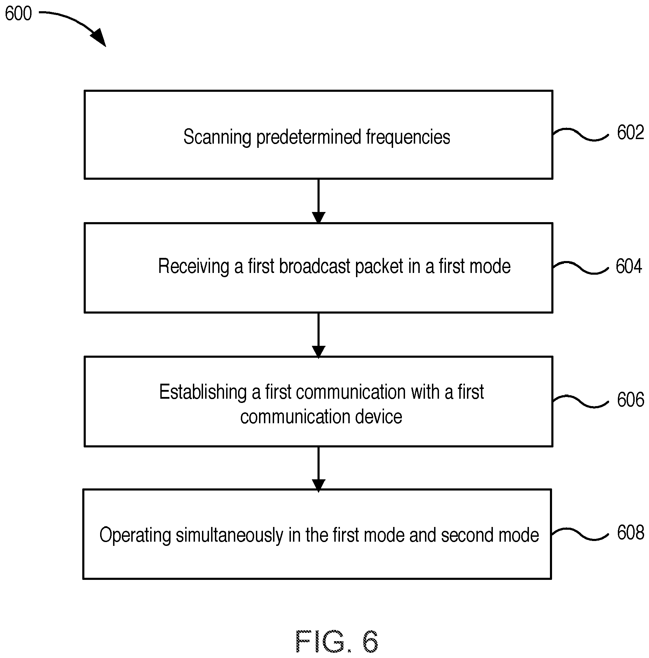

Referring now to FIG. 6, a method 600 for connecting a low-energy radio device, such as, for example, the radio device 300 to one or more of the communication devices 100a-100*n*. The method 600 includes scanning predetermined radio frequencies at step 602, via a transceiver communicatively coupled to a processor operating in a first mode. At step 604, the method includes receiving via the transceiver, in response to operating in the first mode, a broadcast packet broadcasted by a first communication device of a set of communication devices. The method includes at step 606, establishing a communication channel with the first communication device and at step 608, operating the processor simultaneously in the first mode and the second mode by operating the processor in the second mode with respect to the first communication device and operating the processor in the first mode with respect to other devices of the set of communication devices. In some embodiments, the first mode in the method is an observer mode as described herein. In some embodiments, the second mode in the method is a peripheral mode.

In some embodiments, the broadcast packet is a first broadcast packet and the communication channel is a first communication channel, the method 600 further includes receiving, in response to operating the processor in the first mode with respect to other devices, a second broadcast packet broadcasted by a second communication device of the set of communication devices. Additionally, the method includes establishing a second communication channel with the second communication device and operating the processor simultaneously in the first mode and the second mode by operating the processor in the second mode with respect to the first communication device and the second communication device and operating the processor in the first mode with respect to remainder devices of the set of communication devices.

In some embodiments, the method includes executing one or more instructions received from the first communication device via the first communication channel while the processor is operating in the second mode. In some embodiments, the method includes executing one or more instructions received from the second communication device via the second communication channel while the processor is operating in the second mode.

In some embodiments, the broadcast packet includes a group identification number and a passcode, and the establishing the communication channel includes establishing the communication channel based on the group identification number and the passcode.

In some embodiments, the method includes processor associated with a light-emitter, the method further comprising executing an instruction received from the first communication device while the processor is operating in the second mode, the instruction associated with control of operation of the light-emitter.

While various inventive embodiments have been described and illustrated herein, those of ordinary skill in the art will readily envision a variety of other means and/or structures for performing the function and/or obtaining the results and/or one or more of the advantages described herein. For example, while some actions, processes and/or functions are described as occurring simultaneously, it is to be understood that, according to some embodiments, one or more of those actions, processes and/or functions may occur substantially simultaneously or near simultaneously. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that inventive embodiments may be practiced otherwise than as specifically described. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure. Further embodiments may be patentable over prior art by specifically lacking one or more features/functionality (i.e., claims directed to such embodiments may include negative limitations to distinguish such claims from prior art).

The above-described embodiments of the present disclosure can be implemented in any of numerous ways. For example, some embodiments may be implemented using hardware, software or a combination thereof. When any aspect of an embodiment is implemented at least in part in software, the software code can be executed on any suitable processor or collection of processors, whether provided in a single computer or distributed among multiple computers.

In this respect, various embodiments disclosed herein may be embodied at least in part as a computer readable storage medium (or multiple computer readable storage media) (e.g., a computer memory, one or more floppy discs, compact discs, optical discs, magnetic tapes, flash memories, circuit configurations in Field Programmable Gate Arrays or other semiconductor devices, or other tangible computer storage medium or non-transitory medium) encoded with one or more programs that, when executed on one or more computers or other processors, perform methods that implement the various embodiments of the technology discussed above. The computer readable medium or media can be transportable, such that the program or programs stored thereon can be loaded onto one or more different computers or other processors to implement various aspects of the present technology as discussed above.

The terms "program" or "software" are used herein in a generic sense to refer to any type of computer code or set of computer-executable instructions that can be employed to program a computer or other processor to implement various aspects of the present technology as discussed above. Additionally, it should be appreciated that according to one aspect of this embodiment, one or more computer programs that when executed perform methods of the present technology need not reside on a single computer or processor, but may be distributed in a modular fashion amongst a number of different computers or processors to implement various aspects of the present technology.

Computer-executable instructions may be in many forms, such as program modules, executed by one or more computers or other devices. Generally, program modules include routines, programs, objects, components, data structures, *etc.* that perform particular tasks or implement particular abstract data types. Typically the functionality of the program modules may be combined or distributed as desired in various embodiments.

Also, the technology described herein may be embodied as a method, of which at least one example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

All definitions, as defined and used herein, should be understood to control over dictionary definitions, definitions in documents referenced herein, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of" will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of' and "consisting essentially of' shall be closed or semi-closed transitional phrases, respectively.

## Claims

1. A low-energy radio device (300, 400), comprising:
a transceiver; and
a processor communicatively coupled to the transceiver, the processor configured to operate in a first mode and a second mode by:
operating in the first mode by scanning (602) for, via the transceiver, predetermined radio frequencies;
receiving (604), in response to operating in the first mode, a first broadcast packet broadcasted by a first communication device (200a) of a set of communication devices (100a, 100b ... 100n; 200a, 200b);
establishing (606) a first communication channel with the first communication device (200a);
operating simultaneously (608) in the first mode and the second mode by operating in the second mode with respect to the first communication device and operating in the first mode with respect to other devices of the set of communication devices;
receiving, in response to operating the processor in the first mode with respect to a second communication device of the set of communication devices, a second broadcast packet broadcasted by the second communication device;
establishing a second communication channel (220b) with the second communication device; and
operating the processor simultaneously in the first mode and the second mode by:
operating the processor in the second mode with respect to the first communication device and the second communication device; and
operating the processor in the first mode with respect to remainder devices of the set of communication devices,
wherein the processor is configured to receive one or more instructions from a respective communication device via a respective communication channel while operating in the second mode with respect to the respective communication device, and the processor is further configured to execute the one or more instructions.

2. The low-energy radio device of claim 1, wherein the first mode is an observer mode.

3. The low-energy radio device of claim 1, wherein the second mode is a peripheral mode.

4. The low-energy radio device of claim 1, wherein the first broadcast packet includes a group identification number and a passcode,
and wherein the processor is further configured to establish the first communication channel based on the group identification number and the passcode.

5. The low-energy radio device of claim 4, wherein the first communication channel is encrypted based on the group identification number and the passcode.

6. The low-energy radio device of claim 1, further comprising a light-emitter, wherein the processor is further configured to execute an instruction received from the first communication device, and wherein the instruction is associated with control of operation of the light-emitter.

7. A system (10), comprising:
a set of communication devices (100a, 100b ... 100n; 200a, 200b) including a first communication device (200a) and a second communication device (200b); and
a low-energy radio device (300, 400), the low-energy radio device including a transceiver, and a processor communicatively coupled to the transceiver, the processor configured to operate in a first mode and a second mode by:
operating in the first mode by scanning (602) for, via the transceiver, predetermined radio frequencies;
receiving (604), in response to operating in the first mode, a first broadcast packet broadcasted by the first communication device; and
establishing (606) a first communication channel (220a) with the first communication device;
operating simultaneously (608) in the first mode and the second mode by operating in the second mode with respect to the first communication device and operating in the first mode with respect to the second communication device;
receiving, in response to operating the processor in the first mode with respect to the second communication device, a second broadcast packet broadcasted by the second communication device;
establishing a second communication channel (220b) with the second communication device; and
operating the processor simultaneously in the first mode and the second mode by:
operating the processor in the second mode with respect to the first communication device and the second communication device; and
operating the processor in the first mode with respect to remainder devices of the set of communication devices,
wherein the processor is configured to receive one or more instructions from a respective communication device via a respective communication channel while operating in the second mode with respect to the respective communication device, and the processor is further configured to execute the one or more instructions.

8. The system of claim 7, wherein the first mode is an observer mode and the second mode is a peripheral mode.

9. The system of claim 7, wherein:
the first broadcast packet includes a first group identification number and a first passcode,
the processor is configured to establish the first communication channel based on the first group identification number and the first passcode, and
the second broadcast packet includes a second group identification number and a second passcode, and the processor is configured to establish the second communication channel based on the second group identification number and the second passcode.

10. The low-energy radio device of claim 9, wherein the first communication channel is encrypted based on the first group identification number and a first passcode, and wherein the second communication channel is encrypted based on the second group identification number and a second passcode.

11. The system of claim 7, wherein the low-energy radio device further includes a light-emitter communicably coupled to the processor, wherein the processor is further configured for executing an instruction received from the first communication device while the processor is operating in the second mode, and wherein the instruction is associated with control of operation of the light-emitter.

## Patentansprüche

1. Niederenergie-Funkvorrichtung (300, 400), umfassend: einen Sendeempfänger; und
einen Prozessor, der kommunikativ mit dem Sendeempfänger gekoppelt ist, wobei der Prozessor so konfiguriert ist, dass er in einem ersten Modus und in einem zweiten Modus betrieben wird, durch:
Betreiben in dem ersten Modus durch Abtasten (602) über den Sendeempfänger nach vorbestimmten Funkfrequenzen;
Empfangen (604) eines ersten Sendepakets, das von einer ersten Kommunikationsvorrichtung (200a) eines Satzes von Kommunikationsvorrichtungen (100a, 100b ... 100n; 200a, 200b) in Reaktion auf das Betreiben in dem ersten Modus gesendet wird;
Einrichten (606) eines ersten Kommunikationskanals mit der ersten Kommunikationsvorrichtung (200a);
gleichzeitiges Betreiben (608) in dem ersten Modus und dem zweiten Modus durch Betreiben in dem zweiten Modus in Bezug auf die erste Kommunikationsvorrichtung und Betreiben in dem ersten Modus in Bezug auf andere Vorrichtungen des Satzes von Kommunikationsvorrichtungen;
in Reaktion auf das Betreiben des Prozessors in dem ersten Modus in Bezug auf eine zweite Kommunikationsvorrichtung des Satzes von Kommunikationsvorrichtungen, Empfangen eines zweiten Sendepakets, das von der zweiten Kommunikationsvorrichtung gesendet wird;
Einrichten eines zweiten Kommunikationskanals (220b) mit der zweiten Kommunikationsvorrichtung; und
gleichzeitiges Betreiben des Prozessors in dem ersten Modus und dem zweiten Modus, durch:
Betreiben des Prozessors in dem zweiten Modus in Bezug auf die erste Kommunikationsvorrichtung und die zweite Kommunikationsvorrichtung; und
Betreiben des Prozessors in dem ersten Modus in Bezug auf die verbleibenden Vorrichtungen des Satzes von Kommunikationsvorrichtungen, wobei der Prozessor so konfiguriert ist, dass er eine oder mehrere Anweisungen von einer jeweiligen Kommunikationsvorrichtung über einen jeweiligen Kommunikationskanal empfängt, während er in dem zweiten Modus in Bezug auf die jeweilige Kommunikationsvorrichtung betrieben wird,
und wobei der Prozessor ferner konfiguriert ist, um die eine oder die mehreren Anweisungen auszuführen.

2. Niedrigenergie-Funkvorrichtung nach Anspruch 1, wobei der erste Modus ein Beobachtermodus ist.

3. Niedrigenergie-Funkvorrichtung nach Anspruch 1, wobei der zweite Modus ein peripherer Modus ist.

4. Niedrigenergie-Funkvorrichtung nach Anspruch 1, wobei das erste Sendepaket eine Gruppenidentifikationsnummer und einen Sicherheitscode beinhaltet,
und wobei der Prozessor ferner konfiguriert ist, um den ersten Kommunikationskanal basierend auf der Gruppenidentifikationsnummer und dem Sicherheitscode einzurichten.

5. Niedrigenergie-Funkvorrichtung nach Anspruch 4, wobei der erste Kommunikationskanal basierend auf der Gruppenidentifikationsnummer und dem Sicherheitscode verschlüsselt ist.

6. Niedrigenergie-Funkvorrichtung nach Anspruch 1, ferner umfassend einen Lichtemitter, wobei der Prozessor ferner konfiguriert ist, eine von der ersten Kommunikationsvorrichtung empfangene Anweisung auszuführen, und wobei die Anweisung mit dem Steuern des Betriebs des Lichtemitters assoziiert ist.

7. System (10), umfassend:
einen Satz von Kommunikationsvorrichtungen (100a, 100b ... 100n; 200a, 200b), beinhaltend eine erste Kommunikationsvorrichtung (200a) und eine zweite Kommunikationsvorrichtung (200b); und eine Niedrigenergie-Funkvorrichtung (300, 400), wobei die Niedrigenergie-Funkvorrichtung einen Sendeempfänger und einen Prozessor beinhaltet, der kommunikativ mit dem Sendeempfänger gekoppelt ist, wobei der Prozessor so konfiguriert ist, dass er in einem ersten Modus und einem zweiten Modus betrieben wird, durch:
Betreiben in dem ersten Modus durch Abtasten (602) über den Sendeempfänger nach vorbestimmten Funkfrequenzen;
Empfangen (604), in Reaktion auf das Betreiben in dem ersten Modus, eines ersten Sendepakets, das von der ersten Kommunikationsvorrichtung gesendet wurde; und
Einrichten (606) eines ersten Kommunikationskanals (220a) mit der ersten Kommunikationsvorrichtung;
gleichzeitiges Betreiben (608) in dem ersten Modus und dem zweiten Modus durch Betreiben in dem zweiten Modus in Bezug auf die erste Kommunikationsvorrichtung und Betreiben in dem ersten Modus in Bezug auf die zweite Kommunikationsvorrichtung;
in Reaktion auf das Betreiben des Prozessors in dem ersten Modus in Bezug auf die zweite Kommunikationsvorrichtung, Empfangen eines zweiten Sendepakets, das von der zweiten Kommunikationsvorrichtung gesendet wird;
Einrichten eines zweiten Kommunikationskanals (220b) mit der zweiten Kommunikationsvorrichtung; und
gleichzeitiges Betreiben des Prozessors in dem ersten Modus und dem zweiten Modus, durch:
Betreiben des Prozessors in dem zweiten Modus in Bezug auf die erste Kommunikationsvorrichtung und die zweite Kommunikationsvorrichtung; und
Betreiben des Prozessors in dem ersten Modus in Bezug auf die verbleibenden Vorrichtungen des Satzes von Kommunikationsvorrichtungen, wobei der Prozessor so konfiguriert ist, dass er eine oder mehrere Anweisungen von einer jeweiligen Kommunikationsvorrichtung über einen jeweiligen Kommunikationskanal empfängt, während er in dem zweiten Modus in Bezug auf die jeweilige Kommunikationsvorrichtung betrieben wird,
und wobei der Prozessor ferner konfiguriert ist, um die eine oder die mehreren Anweisungen auszuführen.

8. System nach Anspruch 7, wobei der erste Modus ein Beobachtermodus und der zweite Modus ein peripherer Modus ist.

9. System nach Anspruch 7, wobei:
das erste Sendepaket eine erste Gruppenidentifikationsnummer und einen ersten Sicherheitscode beinhaltet,
der Prozessor so konfiguriert ist, dass er den ersten Kommunikationskanal basierend auf der ersten Gruppenidentifikationsnummer und dem ersten Sicherheitscode einrichtet, und
das zweite Sendepaket eine zweite Gruppenidentifikationsnummer und einen zweiten Sicherheitscode beinhaltet, und der Prozessor so konfiguriert ist, dass er den zweiten Kommunikationskanal basierend auf der zweiten Gruppenidentifikationsnummer und dem zweiten Sicherheitscode einrichtet.

10. Niedrigenergie-Funkvorrichtung nach Anspruch 9, wobei der erste Kommunikationskanal basierend auf der ersten Gruppenidentifikationsnummer und einem ersten Sicherheitscode verschlüsselt ist, und wobei der zweite Kommunikationskanal basierend auf der zweiten Gruppenidentifikationsnummer und einem zweiten Sicherheitscode verschlüsselt ist.

11. System nach Anspruch 7, wobei die Niedrigenergie-Funkvorrichtung ferner einen Lichtemitter beinhaltet, der kommunikativ mit dem Prozessor gekoppelt ist, wobei der Prozessor ferner so konfiguriert ist, dass er eine von der ersten Kommunikationsvorrichtung empfangene Anweisung ausführt, während der Prozessor in dem zweiten Modus betrieben wird, und wobei die Anweisung mit dem Steuern des Betriebs des Lichtemitters assoziiert ist.

## Revendications

1. Dispositif radio à faible énergie (300, 400), comprenant : un émetteur-récepteur ; et
un processeur couplé de manière communicative à l'émetteur-récepteur, le processeur étant configuré pour fonctionner dans un premier mode et un deuxième mode par :
le fonctionnement dans le premier mode par le balayage (602) pour, via l'émetteur-récepteur, des fréquences radio prédéterminées ;
la réception (604), en réponse au fonctionnement dans le premier mode, d'un premier paquet de diffusion diffusé par un premier dispositif de communication (200a) d'un ensemble de dispositifs de communication (100a, 100b ... 100n ; 200a, 200b) ;
l'établissement (606) d'un premier canal de communication avec le premier dispositif de communication (200a) ;
le fonctionnement simultanément (608) dans le premier mode et dans le deuxième mode par le fonctionnement dans le deuxième mode par rapport au premier dispositif de communication et le fonctionnement dans le premier mode par rapport aux autres dispositifs de l'ensemble de dispositifs de communication ;
la réception, en réponse au fonctionnement du processeur dans le premier mode par rapport à un deuxième dispositif de communication de l'ensemble de dispositifs de communication, d'un deuxième paquet de diffusion diffusé par le deuxième dispositif de communication ;
l'établissement d'un deuxième canal de communication (220b) avec le deuxième dispositif de communication ; et
le fonctionnement du processeur simultanément dans le premier mode et dans le deuxième mode par :
le fonctionnement du processeur dans le deuxième mode par rapport au premier dispositif de communication et au deuxième dispositif de communication ; et
le fonctionnement du processeur dans le premier mode par rapport aux dispositifs restants de l'ensemble de dispositifs de communication, dans lequel le processeur est configuré pour recevoir une ou plusieurs instructions à partir d'un dispositif de communication respectif via un canal de communication respectif tout en fonctionnant dans le deuxième mode par rapport au dispositif de communication respectif,
et le processeur est en outre configuré pour exécuter la ou les instructions.

2. Dispositif radio à faible énergie selon la revendication 1, dans lequel le premier mode est un mode observateur.

3. Dispositif radio à faible énergie selon la revendication 1, dans lequel le deuxième mode est un mode périphérique.

4. Dispositif radio à faible énergie selon la revendication 1, dans lequel le premier paquet de diffusion comprend un numéro d'identification de groupe et un code d'accès,
et dans lequel le processeur est en outre configuré pour établir le premier canal de communication sur base du numéro d'identification de groupe et du code d'accès.

5. Dispositif radio à faible énergie selon la revendication 4, dans lequel le premier canal de communication est crypté sur base du numéro d'identification de groupe et du code d'accès.

6. Dispositif radio à faible énergie selon la revendication 1, comprenant en outre un émetteur de lumière, dans lequel le processeur est en outre configuré pour exécuter une instruction reçue à partir du premier dispositif de communication, et dans lequel l'instruction est associée à une commande de fonctionnement de l'émetteur de lumière.

7. Système (10) comprenant :
un ensemble de dispositifs de communication (100a, 100b ... 100n ; 200a, 200b) comprenant un premier dispositif de communication (200a) et un deuxième dispositif de communication (200b) ; et
un dispositif radio à faible énergie (300, 400), le dispositif radio à faible énergie comprenant un émetteur-récepteur, et un processeur couplé de manière communicative à l'émetteur-récepteur, le processeur étant configuré pour fonctionner dans un premier mode et dans un deuxième mode par :
le fonctionnement dans le premier mode par le balayage (602) pour, via l'émetteur-récepteur, des fréquences radio prédéterminées ;
la réception (604), en réponse au fonctionnement dans le premier mode, d'un premier paquet de diffusion diffusé par le premier dispositif de communication ; et
l'établissement (606) d'un premier canal de communication (220a) avec le premier dispositif de communication ;
le fonctionnement simultanément (608) dans le premier mode et dans le deuxième mode par le fonctionnement dans le deuxième mode par rapport au premier dispositif de communication et par le fonctionnement dans le premier mode par rapport au deuxième dispositif de communication ;
la réception, en réponse au fonctionnement du processeur dans le premier mode par rapport au deuxième dispositif de communication, d'un deuxième paquet de diffusion diffusé par le deuxième dispositif de communication ;
l'établissement d'un deuxième canal de communication (220b) avec le deuxième dispositif de communication ; et
le fonctionnement du processeur simultanément dans le premier mode et dans le deuxième mode par :
le fonctionnement du processeur dans le deuxième mode par rapport au premier dispositif de communication et au deuxième dispositif de communication ; et
le fonctionnement du processeur dans le premier mode par rapport aux dispositifs restants de l'ensemble de dispositifs de communication, dans lequel le processeur est configuré pour recevoir une ou plusieurs instructions à partir d'un dispositif de communication respectif via un canal de communication respectif tout en fonctionnant dans le deuxième mode par rapport au dispositif de communication respectif,
et le processeur étant en outre configuré pour exécuter la ou les instructions.

8. Système selon la revendication 7, dans lequel le premier mode est un mode observateur et le deuxième mode est un mode périphérique.

9. Système selon la revendication 7, dans lequel :
le premier paquet de diffusion comprend un premier numéro d'identification de groupe et un premier code d'accès,
le processeur est configuré pour établir le premier canal de communication sur base du premier numéro d'identification de groupe et du premier code d'accès, et
le deuxième paquet de diffusion comprend un deuxième numéro d'identification de groupe et un deuxième code d'accès, et le processeur est configuré pour établir le deuxième canal de communication sur base du deuxième numéro d'identification de groupe et du deuxième code d'accès.

10. Dispositif radio à faible énergie selon la revendication 9, dans lequel le premier canal de communication est crypté sur base du premier numéro d'identification de groupe et d'un premier code d'accès, et dans lequel le deuxième canal de communication est crypté sur base du deuxième numéro d'identification de groupe et d'un deuxième code d'accès.

11. Système selon la revendication 7, dans lequel le dispositif radio à faible énergie comprend en outre un émetteur de lumière couplé de manière communicative au processeur, dans lequel le processeur est en outre configuré pour l'exécution d'une instruction reçue à partir du premier dispositif de communication alors que le processeur fonctionne dans le deuxième mode, et dans lequel l'instruction est associée à la commande de fonctionnement de l'émetteur de lumière.
